(19) Europäisches Patentamt / European Patent Office / Office européen des brevets

(11) **EP 3 882 735 B1**

(12) **FASCICULE DE BREVET EUROPEEN**

(45) Date de publication et mention
de la délivrance du brevet:
**12.10.2022 Bulletin 2022/41**

(21) Numéro de dépôt: **21163335.9**

(22) Date de dépôt: **18.03.2021**

(51) Classification Internationale des Brevets (IPC):
**G05D 1/10** *(2006.01)* **G01C 23/00** *(2006.01)*
**G01S 17/00** *(2020.01)*

(52) Classification Coopérative des Brevets (CPC):
**G05D 1/102; G01C 21/20; G01S 13/933;
G01S 17/933**

(54) **PROCÉDÉ ET SYSTÈME ÉLECTRONIQUE DE GÉNÉRATION D'AU MOINS UNE CONSIGNE DE GUIDAGE POUR UN AÉRONEF, PROGRAMME D'ORDINATEUR ET AÉRONEF ASSOCIÉS**

VERFAHREN UND ELEKTRONISCHES SYSTEM ZUR ERZEUGUNG MINDESTENS EINER FÜHRUNGSANWEISUNG FÜR EIN LUFTFAHRZEUG, ENTSPRECHENDES COMPUTERPROGRAMM UND LUFTFAHRZEUG

ELECTRONIC METHOD AND SYSTEM FOR GENERATING AT LEAST ONE GUIDANCE INSTRUCTION FOR AN AIRCRAFT, ASSOCIATED COMPUTER PROGRAM AND AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2020 FR 2002733**

(43) Date de publication de la demande:
**22.09.2021 Bulletin 2021/38**

(73) Titulaire: **THALES**
**92400 Courbevoie (FR)**

(72) Inventeurs:
• **LISSAJOUX, Sylvain**
**31036 TOULOUSE CEDEX 1 (FR)**
• **PEYSSONNEL, Guillaume**
**31036 TOULOUSE CEDEX 1 (FR)**
• **CAPELLE, Bruno**
**33700 MERIGNAC (FR)**

(74) Mandataire: **Lavoix**
**2, place d'Estienne d'Orves**
**75441 Paris Cedex 09 (FR)**

(56) Documents cités:
• **ZHAO YUANCHEN ET AL: "UAV formation control with obstacle avoidance using improved artificial potential fields", 2017 36TH CHINESE CONTROL CONFERENCE (CCC), TECHNICAL COMMITTEE ON CONTROL THEORY, CAA, 26 juillet 2017 (2017-07-26), pages 6219-6224, XP033149728, DOI: 10.23919/CHICC.2017.8028347**
• **ESPEN OLAND ET AL: "Collision and terrain avoidance for UAVs using the potential field method", AEROSPACE CONFERENCE, 2013 IEEE, IEEE, 2 mars 2013 (2013-03-02), pages 1-7, XP032397173, DOI: 10.1109/AERO.2013.6497178 ISBN: 978-1-4673-1812-9**

**Description**

La présente invention concerne un procédé de génération d'au moins une consigne de guidage pour un aéronef, le procédé étant mis en oeuvre par un système électronique de génération.

L'invention concerne également un programme d'ordinateur comportant des instructions logicielles qui, lorsqu'elles sont exécutées par un ordinateur, mettent en oeuvre un tel procédé de génération de consigne(s) de guidage.

L'invention concerne également un système électronique de génération d'au moins une consigne de guidage et un aéronef comprenant au moins un système de guidage et un tel système électronique de génération.

L'invention s'applique au domaine de l'avionique, et plus particulièrement à celui des systèmes d'aide au pilotage, notamment les systèmes de contrôle et/ou de guidage. L'invention concerne plus spécifiquement les systèmes d'aide au pilotage pour se prémunir des obstacles à proximité d'un aéronef, c'est-à-dire pour éviter de tels obstacles. Par obstacle, on entend un obstacle fixe, tel qu'un relief, un bâtiment, une grue ; ou encore un obstacle mobile, tel qu'un autre aéronef, en particulier un autre aéronef non-identifié, typiquement un drone.

Actuellement, pour se prémunir des obstacles à proximité d'un aéronef, on connait deux approches.

Une première approche, également appelée approche systémique, est appliquée dans les espaces aériens contrôlés, et elle vise à assurer par procédure qu'aucun obstacle n'est présent sur la trajectoire de l'aéronef. L'objectif des procédures et du contrôle aérien associé est de garantir que la trajectoire des aéronefs est libre de tout obstacle ou conflit.

Une deuxième approche, appliquée dans les espaces non contrôlés, s'appuie sur la capacité d'un opérateur, tel qu'un pilote de l'aéronef, à percevoir son environnement et à adapter le comportement de l'aéronef pour éviter les collisions.

Ces deux approches peuvent être complétées par :

- des systèmes collaboratifs, tels que des systèmes d'alerte de trafic et d'évitement de collision, également appelés TCAS (de l'anglais *Traffic alert and Collision Avoidance System),* ou des systèmes d'alerte des pilotes en vol à vue d'un risque de collision avec un autre aéronef ou avec un obstacle, également appelés FLARM (inspiré de l'anglais *Flight Alarm),* permettant aux utilisateurs des espaces aériens de s'identifier et de s'éviter les uns les autres ; et/ou
- des systèmes reposant sur des bases de données terrain permettant d'avertir l'équipage en cas de collision sol identifiée, tels que des systèmes de sensibilisation et d'alerte de terrain, également appelés TAWS (de l'anglais *Terrain Awareness and Warning System)* ; et/ou
- des systèmes de radar météorologique renvoyant à l'équipage l'image des échos perçus et lui permettant d'analyser la situation météo.

L'article « UAV Formation Control with Obsatacle Avoidance Using Improved Artificial Potential Fields » de Zhao et al décrit un procédé de génération de consigne(s) de guidage pour un aéronef.

Cependant, les solutions actuelles reposent soit sur des solutions collaboratives/systémiques qui ne permettent pas à l'aéronef d'évoluer dans des espaces où cela n'était pas initialement prévu et/ou d'identifier des obstacles non prévus (temporaires, animaux, etc.), soit sur les yeux de l'opérateur et ses capacités d'analyse et de pilotage, avec un risque d'erreur humaine associé et une capacité d'analyse parfois plus limitée qu'un système avionique dédié. A titre d'exemple d'une limite d'un système précité, les bases de données d'un système TAWS ne permettent pas à un hélicoptère de se poser en montagne.

Le but de l'invention est alors de proposer un procédé et un système électronique associé de génération d'au moins une consigne de guidage pour un aéronef permettant de faciliter les interactions avec un environnement proche de l'aéronef, par exemple un évitement d'obstacle(s) ou un suivi de cible(s), afin d'améliorer significativement la sécurité du vol de l'aéronef, notamment dans des environnements complexes et non connus de l'opérateur.

A cet effet, l'invention a pour objet un procédé de génération d'au moins une consigne de guidage pour un aéronef, selon la revendication 1.

Ainsi, le procédé de génération selon l'invention permet de générer, de manière simple et sans requérir une analyse par l'opérateur des données issues du ou des capteurs, au moins une consigne de guidage, à partir des données acquises de la part de chaque source.

La détermination, pour chaque source respective, d'au moins une primitive de potentiel à partir des données acquises, puis le calcul d'un vecteur résultant élémentaire à partir de la ou des primitives de potentiel déterminées pour chaque source, et enfin l'obtention d'un vecteur résultant global à partir d'une somme du ou des vecteurs résultant élémentaires calculés, permet en effet de traiter directement et efficacement les données issues de chaque source.

En particulier, lorsque le ou les capteurs équipant l'aéronef sont des capteurs fournissant une quantité importante de données, avec par exemple 100 000 points à 10 Hz, tels que des capteurs de type radar (de l'anglais *radio detection and ranging)* ou lidar (de l'anglais *light ou laser detection and ranging),* ou encore laser, le procédé de génération selon l'invention requiert une plus faible puissance de calcul que des algorithmes traditionnels de reconnaissance d'images.

De plus, la charge cognitive du pilote étant particulièrement élevée dans les phases proches du terrain, le procédé de génération selon l'invention permet de réduire les risques d'accident en apportant une aide au pilotage significative, notamment lorsque la manœuvre d'évitement est effectuée automatiquement via la transmission de la consigne de guidage à un système avionique correspondant, et/ou via l'affichage de la consigne de guidage sur un système d'affichage.

De préférence, lors de l'étape de détermination, chaque primitive est un point, une sphère, une surface ou encore une primitive uniforme. La primitive est typiquement un point ou une sphère lorsqu'elle correspond à un obstacle isolé à éviter. La primitive est typiquement une surface plane lorsqu'elle correspond au sol, à un bâtiment de dimensions importantes à éviter, ou encore à la frontière d'un espace de vol interdit. Enfin, la primitive est une primitive uniforme lorsqu'elle correspond par exemple à un courant de descente de l'aéronef.

Suivant d'autres aspects avantageux de l'invention, le procédé de génération est selon l'une quelconque des revendications 2 à 7.

L'invention a également pour objet un programme d'ordinateur selon la revendication 8.

L'invention a également pour objet un système électronique de génération d'au moins une consigne de guidage pour un aéronef, selon la revendication 9.

L'invention a également pour objet un aéronef, tel qu'un avion ou un hélicoptère, selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un aéronef comprenant un système électronique de génération selon l'invention, connecté à des systèmes avioniques, notamment à au moins un système de guidage, à un ou plusieurs capteurs, à une base de données de navigation, ainsi qu'à un système d'affichage ;
- la figure 2 illustre quelques exemples de représentation en deux dimensions de champs de potentiel avec des lignes de courant associées, pour des primitives en forme de surface plane, de point ou de sphère, ainsi que pour une primitive uniforme ;
- la figure 3 est une représentation schématique des projections des axes d'un repère lié à l'aéronef dans un repère de référence ;
- la figure 4 représente, d'une part, une courbe illustrant la norme d'un vecteur résultant élémentaire calculé à partir de primitive(s) de potentiel déterminée(s) pour une source respective, la norme dépendant de la distance entre l'aéronef et la primitive de potentiel respective, et illustre d'autre part, une opération de réduction du nombre de primitives de potentiel pour une source donnée ;
- la figure 5 illustre l'adaptation d'une consigne de guidage au champ de vue d'un capteur respectif ;
- la figure 6 est un organigramme d'un procédé, selon l'invention, de génération de consigne(s) de guidage pour l'aéronef de la figure 1 ; et

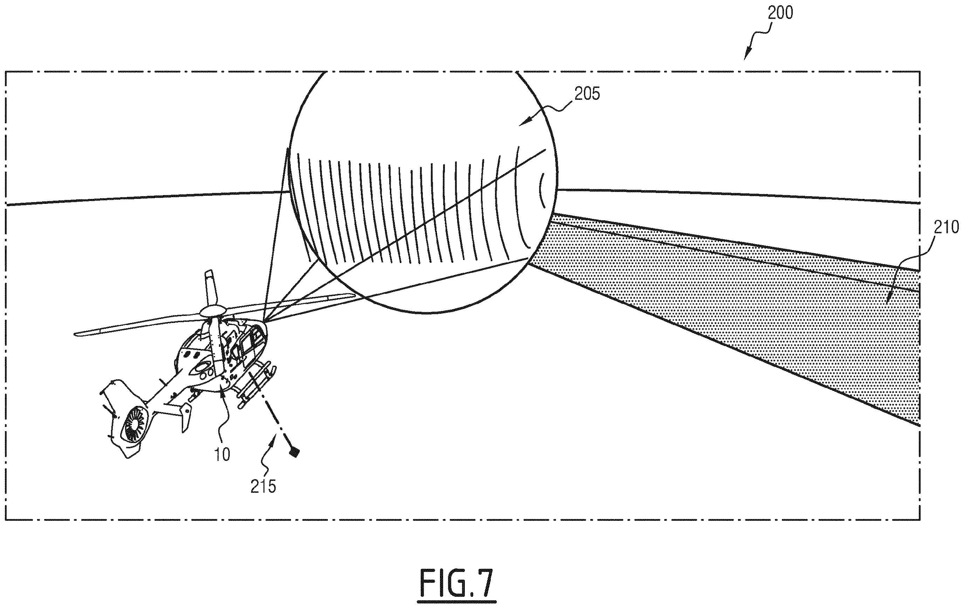

- les figures 7 à 10 sont des vues représentant successivement l'acquisition de données de la part de plusieurs sources, chacune étant choisie parmi un capteur équipant l'aéronef et une base de données ; puis la détermination, pour chaque source respective, d'au moins une primitive de potentiel à partir des données acquises pour ladite source, et le calcul, pour chaque source respective et à partir de la ou des primitives de potentiel déterminées, d'un vecteur résultant élémentaire appliqué à l'aéronef ; l'adaptation optionnelle de primitives de potentiel avec l'ajout d'un décalage, tel qu'un décalage vertical et vers le haut pour éviter un obstacle par le dessus ; et l'obtention d'un vecteur résultant global à partir d'une somme des vecteurs résultant élémentaires calculés.

Dans la description, l'expression « sensiblement égal(e) à » désigne une relation d'égalité à plus ou moins 10 %, de préférence à plus ou moins 5 %.

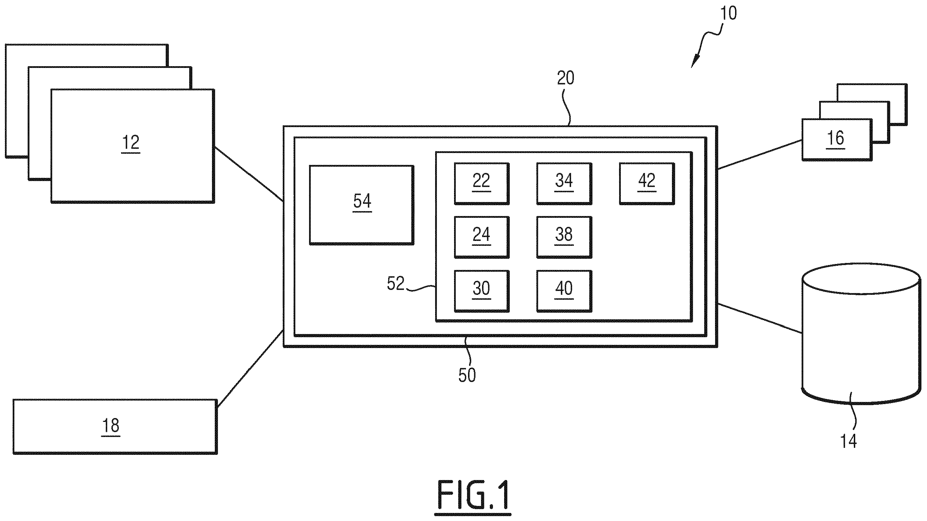

Sur la figure 1, un aéronef 10 comprend plusieurs systèmes avioniques 12, une base de données 14, telle qu'une base de données de navigation, plusieurs capteurs 16, un ou plusieurs systèmes d'affichage 18, et un système électronique de génération de consigne(s) de guidage 20 connecté aux systèmes avioniques 12, à la base de données 14, aux capteurs 16 et au(x) système(s) d'affichage 18.

L'aéronef 10 est par exemple un hélicoptère, comme représenté dans l'exemple des figures 7 à 10. En variante, l'aéronef 10 est un avion, un drone pilotable à distance par un pilote, ou encore un aéronef autonome sans opérateur. L'homme du métier observera que dans le cas où l'aéronef 10 est un aéronef autonome sans opérateur, il ne comprend de préférence pas de système d'affichage.

Les systèmes avioniques 12 sont connus en soi et sont aptes à transmettre au système électronique de génération 20 différentes données avioniques, par exemple des données dites « aéronef », telles que la position, la vitesse, l'accélération, l'orientation, le cap ou encore l'altitude de l'aéronef 10, et/ou des données dites « navigation », telles qu'un plan de vol.

Les systèmes avioniques 12 sont également aptes à recevoir des consignes, ou encore des commandes, de la part du système de génération 20. Ces systèmes avioniques 12 aptes à recevoir des consignes, et comportent par exemple au moins un système parmi :

- un système de commandes de vol, également noté FCS (de l'anglais *Flight Control System)* ou FBW (de l'anglais *Fly By Wire),* pour agir sur un ensemble de gouvernes et d'actionneurs de l'aéronef. Dans le cas d'un aéronef à voilure fixe, les gouvernes sont, par exemple, des ailerons, la gouverne de profondeur ou la gouverne de direction. Dans le cas d'un aéronef à voilure tournante, les gouvernes sont, par exemple, le pas collectif, le pas cyclique ou le pas du rotor de queue ;
- un système de contrôle moteur, également noté ECU (de l'anglais *Engine Control Unit)* pour faire varier l'énergie délivrée par un moteur de l'aéronef, tel qu'un réacteur, un turbopropulseur ou encore une turbine ;
- au moins un système de guidage, tel qu'un dispositif de pilotage automatique, également noté AFCS (de l'anglais *Auto-Flight Control System),* également appelé pilote automatique et noté PA ou AP (de l'anglais *Automatic Pilot),* tel qu'un système de gestion du vol de l'aéronef, également noté FMS (de l'anglais *Flight Management System).* En complément, le système de guidage est un dispositif d'auto-poussée, également appelé auto-manette.

La base de données 14 est optionnelle, typiquement une base de données de navigation, et est connue en soi. La base de données de navigation est également appelée NAVDB (de l'anglais *NAVigation Data Base),* et comporte notamment des données relatives à des espaces ou zones de vol interdits, des données relatives à des pistes d'atterrissage sur lesquelles l'aéronef 10 est susceptible d'atterrir, ces données étant typiquement une position d'un seuil de la piste d'atterrissage, une orientation de la piste d'atterrissage, une longueur de piste, une altitude ou un point de décision, etc.

Dans l'exemple de la figure 1, la base de données 14 est une base de données externe au système de génération 20. En variante, non représentée, la base de données 14 est une base de données interne au système de génération 20.

Les capteurs 16 sont aptes à mesurer différentes grandeurs associées à l'aéronef 10 et/ou à l'environnement de l'aéronef 10, et comportent par exemple au moins un capteur parmi : un dispositif de télédétection par laser, plus connu sous le nom de lidar (de l'anglais *light detection and ranging)* ; un radar (de l'anglais *radio detection and ranging)* ; un laser (de l'anglais *light amplification by stimulated emission of radiation)* ; un télémètre ; un radioaltimètre ; un accéléromètre ; une centrale inertielle, également appelée IMU (de l'anglais *Inertial Measurement Unit)* ; un capteur à effet Doppler ; un capteur de positionnement par satellites, tel qu'un capteur GPS (de l'anglais *Global Positioning System),* un capteur Galileo, un capteur Glonass ; une ou plusieurs caméras stéréoscopiques ; et un capteur de données atmosphériques, telles que pression, température.

Chacun des capteurs électroniques 16 précités est connu en soi. Pour certains capteurs 16, tels que le lidar, le radar et le laser, les données mesurées par le capteur et destinées à être acquises par le système de génération 20, auquel ils sont connectés, sont en forme de nuages de points. Pour d'autres capteurs 16, tels que le radioaltimètre mesurant une hauteur de l'aéronef 10 par rapport au sol, l'accéléromètre et la centrale inertielle ou encore le capteur de données atmosphériques, la ou les données mesurées par le capteur et destinées à être acquises par le système de génération 20, auquel ils sont connectés, sont en forme de valeur(s) d'une ou plusieurs grandeurs respectives, telles que la hauteur par rapport au sol, des attitudes, des accélérations. En complément facultatif, la ou les données destinées à être acquises par le système de génération 20 sont des données hybridées, également appelées combinées, c'est-à-dire obtenues à partir de la combinaison de données mesurées via plusieurs capteurs.

Le ou les systèmes d'affichage 18 sont, par exemple, un système d'affichage tête basse et/ou un système d'affichage tête haute, également appelé HUD (de l'anglais *Head-Up Display).* Le système d'affichage tête basse est, par exemple, un système d'affichage de données de navigation (de l'anglais *Navigation Display).* En variante ou en complément, le système d'affichage 18 est un système d'affichage déporté, en particulier un système d'affichage externe à l'aéronef 10, tel qu'un système d'affichage dans une station sol, ou encore la télécommande ou les lunettes de vision d'un opérateur drone.

Le système électronique de génération 20 est configuré pour générer au moins une consigne de guidage $C_G$ pour l'aéronef 10, chaque consigne de guidage générée $C_G$ étant par exemple apte à être ensuite affichée sur le ou les systèmes d'affichage 18, à destination d'un ou plusieurs utilisateurs, tels que l'équipage de l'aéronef 10, et/ou apte à être transmise à un ou plusieurs systèmes avioniques 12, en particulier aux systèmes avioniques 12 aptes à recevoir de telles consignes $C_G$, pour agir ensuite sur le comportement de l'aéronef 10.

L'homme du métier observera en particulier que la ou les consignes de guidage $C_G$ étant générées à partir de données acquises d'une ou plusieurs sources respectives, chaque source respective étant choisie parmi un capteur 16 respectif et la base de données 14, et étant alors apte à détecter un ou plusieurs obstacles se trouvant autour de l'aéronef 10 ou encore à indiquer des espaces de vols interdits, la ou les consignes de guidage générées $C_G$ visent alors notamment à éviter les obstacles détectés et/ou le ou les espaces de vol interdit, en agissant sur le comportement de l'aéronef 10, et en engendrant en particulier une manœuvre d'évitement par l'aéronef 10 du ou des obstacles et/ou du ou des espaces de vol interdit.

En variante, la ou les consignes de guidage générées $C_G$ visent à effectuer un suivi de cible(s), fixe(s) ou mobile(s). Ceci permet par exemple le suivi d'un autre drone pour du vol de drones en formation, lorsque l'aéronef 10 est un drone.

Le système électronique de génération 20 comprend un module 22 d'acquisition de données de la part d'au moins une source, chaque source respective étant choisie parmi un capteur 16 respectif et la base de données 14.

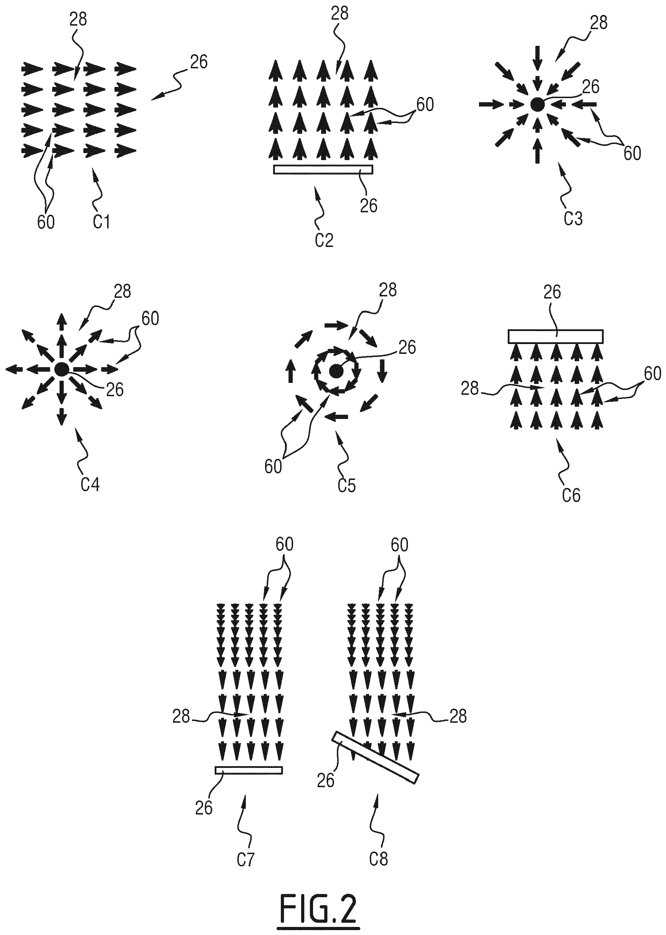

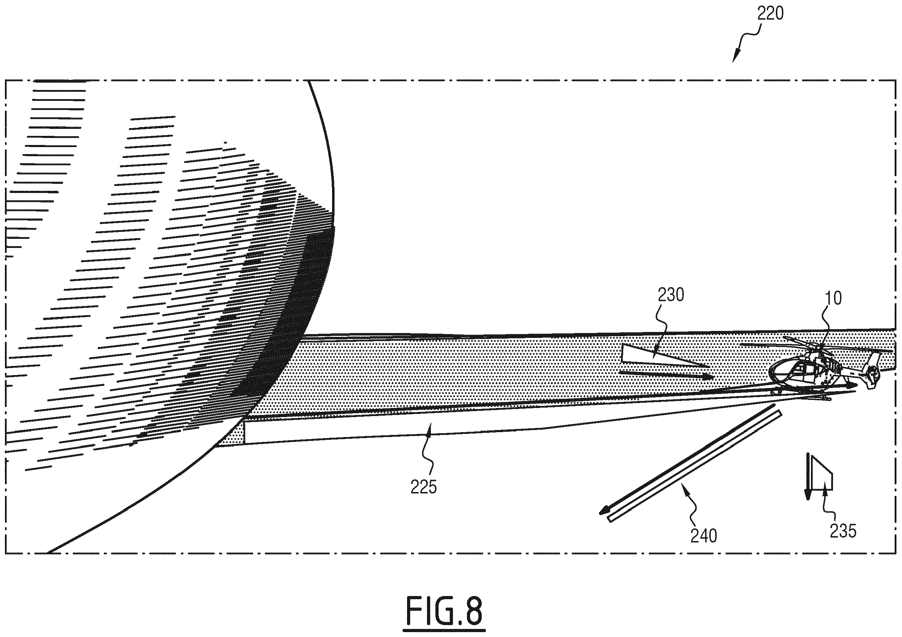

Le système électronique de génération 20 comprend un module 24 de détermination, pour chaque source respective, d'au moins une primitive de potentiel 26 à partir des données acquises pour ladite source, chaque primitive de potentiel 26 engendrant un champ de potentiel 28 applicable à l'aéronef 10, comme illustré sur les figures 2 et 8.

Le système de génération 20 comprend également un module 30 de calcul, pour chaque source respective et à partir de la ou des primitives de potentiel 26 déterminées pour ladite source, d'un vecteur résultant élémentaire 32 appliqué à l'aéronef 10; un module 34 d'obtention d'un vecteur résultant global 36 à partir d'une somme du ou des vecteurs résultants élémentaires 32 calculés ; et un module 38 de conversion du vecteur résultant global 36 en au moins une consigne de guidage $C_G$.

En complément facultatif, le système de génération 20 comprend un module 40 d'affichage de chaque consigne de guidage générée $C_G$ sur le ou les systèmes d'affichage 18.

En complément facultatif encore ou en variante, le système de génération 20 comprend un module 42 de transmission de chaque consigne de guidage générée $C_G$ à au moins un système avionique 12, en particulier à un système avionique 12 apte à recevoir de telles consignes $C_G$.

Dans l'exemple de la figure 1, le système électronique de génération 20 comprend une unité de traitement d'informations 50 formée par exemple d'une mémoire 52 et d'un processeur 54 associé à la mémoire 52.

Dans l'exemple de la figure 1, le module d'acquisition 22, le module de détermination 24, le module de calcul 30, le module d'obtention 34 et le module de conversion 38, ainsi qu'en complément facultatif le module d'affichage 40 et/ou le module de transmission 42, sont réalisés chacun sous forme d'un logiciel, ou d'une brique logicielle, exécutable par le processeur 54. La mémoire 52 du système électronique de génération 20 est alors apte à stocker un logiciel d'acquisition des données de la part de chaque source ; un logiciel de détermination, pour chaque source, d'au moins une primitive de potentiel 26 à partir des données acquises pour ladite source ; un logiciel de calcul, pour chaque source respective et à partir de la ou des primitives de potentiel 26 déterminées pour ladite source, d'un vecteur résultant élémentaire 32 appliqué à l'aéronef 10 ; un logiciel d'obtention d'un vecteur résultant global 36 à partir de la somme du ou des vecteurs résultants élémentaires 32 calculés ; et un logiciel de conversion du vecteur résultant global 36 en au moins une consigne de guidage $C_G$. En complément facultatif, la mémoire 52 du système électronique de génération 20 est apte à stocker un logiciel d'affichage de chaque consigne de guidage $C_G$ sur le ou les systèmes d'affichage 18 et/ou un logiciel de transmission de chaque consigne de guidage générée $C_G$ à au moins un système avionique 12, en particulier à au moins un système avionique 12 apte à recevoir des consignes $C_G$. Le processeur 54 est alors apte à exécuter chacun des logiciels parmi le logiciel d'acquisition, le logiciel de détermination, le logiciel de calcul, le logiciel d'obtention et le logiciel de conversion, ainsi qu'en complément facultatif le logiciel d'affichage et/ou le logiciel de transmission.

Lorsqu'en variante, non représentée, la base de données 14 est une base de données interne du système de génération 20, elle est typiquement apte à être stockée dans une mémoire du système de génération 20, telle que la mémoire 52.

En variante non représentée, le module d'acquisition 22, le module de détermination 24, le module de calcul 30, le module d'obtention 34 et le module de conversion 38, ainsi qu'en complément facultatif le module d'affichage 40 et/ou le module de transmission 42, sont réalisés chacun sous forme d'un composant logique programmable, tel qu'un FPGA (de l'anglais *Field Programmable Gate Array)* ; ou encore sous forme d'un circuit intégré dédié, tel qu'un ASIC (de l'anglais *Application Specific Integrated Circuit).*

Lorsque le système électronique de génération 20 est réalisé sous forme d'un ou plusieurs logiciels, c'est-à-dire sous forme d'un programme ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module d'acquisition 22 est configuré pour acquérir les données de la part de chaque source, telles que des données en forme de nuage de points lorsque la source est un lidar, un radar, un capteur à effet Doppler ou encore un laser, ou en forme de valeur(s) de grandeur(s) mesurée(s) lorsque la source est un capteur 16 autre qu'un lidar, un laser ou un radar, ou encore en forme de coordonnées de frontière délimitant une zone ou un espace interdit de vol, ou bien délimitant une zone ou un espace à atteindre, tel qu'un héliport, lorsque la source est la base de données 14. Le nuage de points ou la ou les valeurs de grandeur(s) correspondent aux mesures effectuées par chaque capteur 16 respectif.

Le module de détermination 24 est configuré pour déterminer, pour chaque source respective, au moins une primitive de potentiel 26 à partir des données acquises pour ladite source, chaque primitive de potentiel 26 engendrant un champ de potentiel 28 respectif applicable à l'aéronef 10, comme illustré dans l'exemple de la figure 8.

La figure 2 illustre alors divers exemples de représentation en deux dimensions de primitives de potentiel 26 et de champs de potentiel 28 associés, à travers un premier cas C1, un deuxième cas C2, un troisième cas C3, un quatrième cas C4, un cinquième cas C5, un sixième cas C6, un septième cas C7 et un huitième cas C8.

Chaque primitive de potentiel 26 est par exemple :

- un point ou une sphère, comme dans les troisième, quatrième et cinquième cas C3, C4 et C5 de la figure 2, ou encore avec la primitive associée au lidar dans l'exemple des figures 7 à 10, ladite primitive étant globalement en forme de sphère et une primitive en forme de point étant en outre associée à chaque point du nuage de points acquis de la part du lidar ;
- une surface, telle qu'une surface plane, comme dans les deuxième, sixième, septième et huitième cas C2, C6, C7 et C8 de la figure 2, ou encore avec l'espace de vol interdit issu de la base de données 14 et le sol associé au radioaltimètre dans l'exemple des figures 7 à 10 ; ou encore
- une primitive uniforme comme dans le premier cas C1 de la figure 2, ou encore avec un courant de descente de l'aéronef 10 dans l'exemple des figures 7 à 10, ce courant de descente engendrant alors un vecteur résultant élémentaire de norme constante appliqué à l'aéronef 10 et orienté de manière inclinée vers le sol.

Chaque champ de potentiel 28 associé à une primitive de potentiel 26 respective est :

- un champ attractif, comme dans les troisième, sixième, septième et huitième cas C3, C6, C7 et C8 de la figure 2 ;
- un champ répulsif, comme dans les deuxième et quatrième cas C2, C4 de la figure 2 ; ou encore
- un champ neutre comme dans les premier et cinquième cas C1, C5 de la figure 2.

L'homme du métier comprendra alors que si le champ de potentiel 28 engendré par la primitive de potentiel 26 est un champ attractif, alors le vecteur résultant élémentaire 32, appliqué à l'aéronef 10 et qui résulte de ce champ de potentiel 28, est orienté de l'aéronef 10 vers la primitive de potentiel 26 respective ; et que si le champ de potentiel 28 associé à la primitive de potentiel 26 est un champ répulsif, alors le vecteur résultant élémentaire 32, appliqué à l'aéronef 10 et qui résulte de ce champ de potentiel 28, est orienté à l'opposé de la primitive de potentiel 26, c'est-à-dire depuis l'aéronef 10 et en direction opposée à la primitive de potentiel 26 respective.

En complément, l'intensité de chaque champ de potentiel 28 est de valeur constante, comme dans les premier, deuxième et sixième cas C1, C2 et C6 de la figure 2 ; ou encore de valeur variable en fonction de la distance à la primitive de potentiel 26 respective, comme dans les troisième, quatrième, cinquième, septième et huitième cas C3, C4, C5, C7 et C8, l'intensité du champ de potentiel 28 décroissant en se rapprochant de la primitive de potentiel 26 respective dans les troisième et cinquième cas, C3, C5 et inversement l'intensité du champ de potentiel 28 croissant en se rapprochant de la primitive de potentiel 26 respective dans les quatrième, septième et huitième cas C4, C7 et C8.

En complément facultatif encore, le champ de potentiel 28 est par exemple orthogonal à la primitive de potentiel 26 respective comme dans les deuxième, troisième, quatrième, sixième et septième cas C2, C3, C4, C6, C7, ou encore incliné par rapport à ladite primitive de potentiel 26 comme dans le huitième cas C8.

Le premier cas C1 correspond alors à une primitive de potentiel 26 uniforme avec un champ de potentiel 28 de valeur constante ; le deuxième cas C2 correspond à une primitive de potentiel 26 en forme de surface plane avec un champ de potentiel 28 répulsif, orthogonal à la primitive de potentiel 26 et d'intensité de valeur constante ; le troisième cas C3 correspond à une primitive de potentiel 26 en forme de point ou de sphère, avec un champ de potentiel 28 attractif et d'intensité de valeur décroissante en se rapprochant de la primitive de potentiel 26 ; le quatrième cas C4 correspond à une primitive de potentiel 26 en forme de point ou de sphère, avec un champ de potentiel 28 répulsif et d'intensité de valeur décroissante en s'éloignant de la primitive de potentiel 26 ; le cinquième cas C5 correspond à une primitive de potentiel 26 en forme de point ou de sphère avec un champ de potentiel 28 neutre et d'intensité de valeur croissante en s'éloignant de la primitive de potentiel 26 ; le sixième cas C6 correspond à une primitive de potentiel 26 en forme de surface plane avec un champ de potentiel 28 attractif, orthogonal à la primitive de potentiel 26 et d'intensité de valeur constante ; le septième cas C7 correspond à une primitive de potentiel 26 en forme de surface plane, avec un champ de potentiel 28 attractif, orthogonal à la primitive de potentiel 26 et d'intensité de valeur croissante en se rapprochant de la primitive de potentiel 26 ; et enfin le huitième cas C8 correspond à une primitive de potentiel 26 en forme de surface plane avec un champ de potentiel 28 attractif, incliné par rapport à la primitive de potentiel 26 et d'intensité de valeur croissante en se rapprochant de la primitive de potentiel 26.

L'homme du métier observera en outre que dans l'exemple de la figure 2, chaque champ de potentiel 28 est représenté via des lignes de courant 60 en forme de successions de vecteurs, ces lignes de courant 60 illustrant le champ de potentiel 28 apte à être appliqué à l'aéronef 10, l'aéronef 10 ayant alors tendance à se déplacer selon les lignes de courant 60 associés à ce champ de potentiel 28.

Le module de détermination 24 est alors par exemple configuré pour déterminer une primitive de potentiel 26 en forme de point, pour chaque point d'un nuage de points acquis pour la source, lorsque ladite source est un capteur 16 de type lidar, radar ou laser. En outre, le capteur 16 de type lidar, radar ou laser étant préférentiellement destiné à détecter des obstacles, le module de détermination 24 est dans ce cas configuré pour déterminer un champ de potentiel 28 de type répulsif pour chaque primitive de potentiel 26 en forme de point, ainsi déterminée.

En complément, le module de détermination 24 est configuré pour déterminer une primitive de potentiel 26 en forme de surface, telle qu'une surface plane, correspondant à la frontière la plus proche de l'aéronef 10, lorsque les données acquises pour ladite source sont des données issues de la base de données 14 correspondant à un espace ou une zone de vol interdit, et le champ de potentiel 28 associé est alors de type répulsif.

En complément, le module de détermination 24 est configuré pour déterminer une primitive de potentiel 26 en forme de surface, telle qu'une surface plane, celle-ci correspondant alors au sol, lorsque les données acquises pour ladite source sont une ou plusieurs valeurs aéronautiques définissant la position du sol, telle qu'une hauteur de l'aéronef 10 par rapport au sol renvoyée par un capteur 16 respectif, de type altimètre ou encore télémètre.

En complément, le module de détermination 24 est configuré pour déterminer une primitive de potentiel 26 en forme de polygone en trois dimensions lorsque les données acquises de la part de la base de données 14 sont des données relatives à un ou des obstacles fixes, ou encore des données météorologiques, ledit polygone englobant alors le ou les obstacles fixes, tels qu'un bâtiment, une grue, etc., ou encore une zone de convection associée aux données météorologiques.

En complément, les données issues d'un capteur 16 respectif de type accéléromètre ou centrale inertielle sont typiquement utilisées pour être hybridées avec les données acquises de la part d'autre(s) capteur(s) 16.

En complément facultatif, le module de détermination 24 est configuré pour appliquer un traitement complémentaire à des primitives de potentiel 26 déterminées, afin d'en réduire le nombre, notamment dans le cas d'une pluralité de primitives de potentiel 26 déterminées à partir d'une même source respective, tel qu'un capteur 16 de type lidar, radar ou laser.

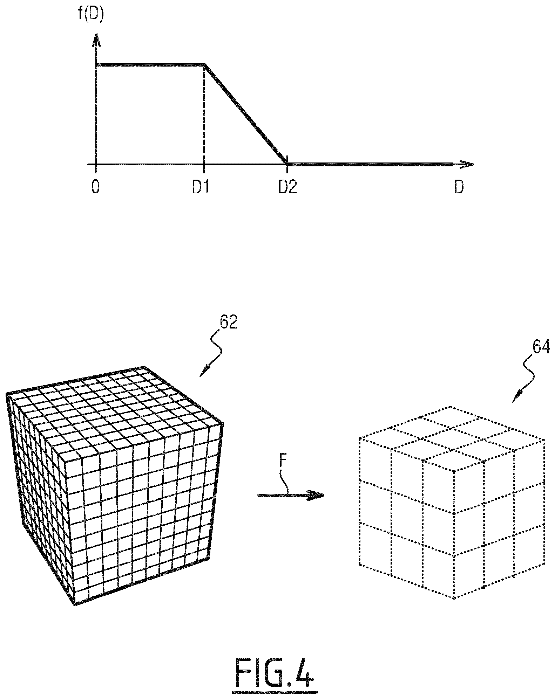

Selon ce complément facultatif, le module de détermination 24 est en particulier configuré pour appliquer ledit traitement à la pluralité de primitives de potentiel 26 en forme de point, déterminées à partir d'un nuage de points acquis de la part d'un lidar, d'un radar ou encore d'un laser. Dans l'exemple de la figure 4, les primitives de potentiel 26 initialement déterminées sont disposées en forme d'un premier maillage 62 de primitives de potentiel 26, de forme cubique et dense, et l'application du traitement au premier maillage 62 résulte alors en un deuxième maillage 64 de primitives de potentiel 26, cubique mais moins dense, le traitement appliqué étant symbolisé par la flèche F.

Selon ce complément facultatif, le module de détermination 24 est par exemple configuré pour calculer une moyenne de valeurs associées à un sous-groupe de primitives de potentiel 26, afin de conserver ensuite une seule primitive de potentiel 26 pour ledit sous-groupe ayant pour valeur la valeur moyennée. La valeur associée à chaque primitive de potentiel 26 est typiquement la distance entre la primitive potentiel 26 respective et l'aéronef 10.

En variante, pour l'application dudit traitement, le module de détermination 24 est configuré pour prendre une valeur maximale ou bien minimale parmi les différentes valeurs associées au sous-groupe de primitives de potentiel 26, afin de conserver ensuite une unique primitive de potentiel 26 pour ledit sous-groupe avec ladite valeur maximale ou bien ladite valeur minimale sélectionnée. Lorsque les primitives de potentiel 26 sont agencées sous forme d'un maillage plan, ou encore cubique comme dans l'exemple de la figure 4, le sous-groupe de primitives de potentiel 26 auquel est appliqué ledit traitement est typiquement un ensemble de primitives de potentiel 26 disposées autour d'une primitive de potentiel 26 considérée.

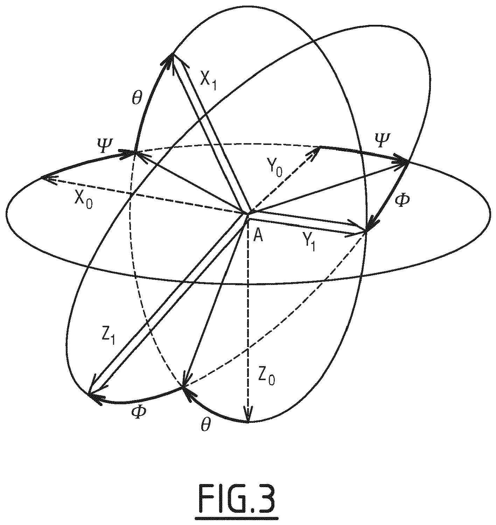

Le module de calcul 30 est ensuite configuré pour calculer un vecteur résultant élémentaire 32 respectif appliqué à l'aéronef 10, ceci pour chaque source respective et à partir de la ou des primitives de potentiel 26 déterminées pour ladite source par le module de détermination 24, le vecteur résultant élémentaire 32 étant alors défini dans un référentiel aéronef, également appelé base aéronef et représenté sur la figure 3, décrite ci-après.

Comme connu en soi, les attitudes de l'aéronef 10 sont des angles orientés pris entre des axes prédéterminés de l'aéronef 10, dits axes aéronef, et leur projection sur des plans de référence. Parmi les attitudes, on distingue l'angle de roulis ou de gîte, l'angle de tangage ou assiette longitudinale, et le cap, connus en soi et rappelés ci-après, en référence à la figure 3.

Les plans de référence sont déterminés à partir de trois axes de référence.

Les axes aéronef et les axes de référence sont concourants en un point prédéterminé A de l'aéronef 10, A étant par exemple proche du centre de gravité de l'aéronef 10.

Les axes de référence sont les axes du référentiel terrestre local et comprennent un axe de référence vertical $z_0$, un axe de référence longitudinal $x_0$ et un axe de référence transversal $y_0$, formant une base orthonormée directe $(x_0, y_0, z_0)$ dite « base de référence ».

L'axe de référence vertical $z_0$ est un axe orienté suivant la direction descendante du champ de pesanteur local et passant par le point prédéterminé A de l'aéronef. L'axe de référence longitudinal $x_0$ est un axe orienté dans une direction prédéterminée, par exemple vers le Nord magnétique ou géographique, et orthogonal à l'axe de référence vertical $z_0$. L'axe de référence transversal $y_0$ complète $z_0$ et $x_0$ pour former la « base de référence ».

Les axes de référence vertical $z_0$ et longitudinal $x_0$ forment un plan de référence vertical. Les axes de référence transversal $y_0$ et longitudinal $x_0$ forment un plan de référence horizontal.

Les axes aéronef comprennent un axe aéronef longitudinal $x_1$, un axe aéronef vertical $z_1$ et un axe aéronef transversal $y_1$, formant une base orthonormée directe (xi,yi,zi) dite « base aéronef ».

L'axe aéronef longitudinal $x_1$ est un axe orienté vers l'avant de l'aéronef, passant par le point prédéterminé A et appartenant à un plan de symétrie de l'aéronef. Le plan de symétrie de l'aéronef est généralement lié à la définition géométrique de la cellule de l'aéronef, il s'agit par exemple du plan passant par le nez de l'aéronef et le point A et orthogonal au plan formé par la voilure de l'aéronef au repos. L'axe aéronef transversal $y_1$ est l'axe perpendiculaire au plan de symétrie et orienté vers la droite de l'aéronef, c'est-à-dire la droite d'un observateur à bord de l'aéronef et regardant vers l'avant de l'aéronef. L'axe aéronef vertical $z_1$ complète $y_1$ et $x_1$ pour former la « base aéronef ».

L'angle $\Phi$ entre l'axe aéronef transversal $y_1$ et le plan de référence horizontal est l'angle de roulis. L'angle $\theta$ entre l'axe aéronef longitudinal $x_1$ et le plan de référence horizontal est l'angle de tangage. L'angle $\psi$ entre l'axe aéronef longitudinal $x_1$ et le plan de référence vertical est le cap. $\Phi$, $\theta$ et $\psi$ sont généralement appelés les angles d'Euler permettant de passer du repère aéronef au repère de référence.

Le module de calcul 30 est typiquement configuré pour calculer la norme de chaque vecteur résultant élémentaire 32 en fonction de la distance entre l'aéronef 10 et la primitive de potentiel 26 respective.

La norme de chaque vecteur résultant élémentaire 32 vérifie par exemple la fonction f(D) visible à la figure 4, où D représente la distance entre l'aéronef 10 et la primitive de potentiel 26 respective. Cet exemple de fonction f(D) correspond alors à un champ de potentiel 28 d'intensité de valeur décroissante en s'éloignant de la primitive de potentiel 26. En effet, dans cet exemple de la figure 4, la fonction f(D) présente un premier palier de valeur maximale pour une distance comprise entre une distance nulle, correspondant à un contact avec la primitive de potentiel 26, et une première distance seuil D1, puis une valeur décroissant linéairement entre la première distance seuil D1 et une deuxième distance seuil D2 jusqu'à une valeur nulle, la fonction f(D) ayant dans cet exemple de la figure 4 une valeur nulle lorsque la distance D est supérieure ou égale à la deuxième distance seuil D2.

Inversement, dans le cas d'un champ de potentiel 28 ayant une intensité de valeur croissante en s'éloignant de la primitive de potentiel 26, la norme de chaque vecteur résultant élémentaire 32 vérifie une autre fonction dans laquelle l'intensité augmente lorsque la distance D entre l'aéronef 10 et la primitive de potentiel 26 respective augmente.

Le module de calcul 30 est par exemple configuré pour, si la primitive de potentiel 26 respective est une primitive en forme de point ou de sphère, calculer la direction du vecteur résultant élémentaire 32 comme étant la direction passant, d'une part, par le centre de la primitive de potentiel 26 en forme de point ou de sphère, et d'autre part par l'aéronef 10, en particulier par le point de référence représentant ledit aéronef 10, tel que son centre de gravité ou encore son nez.

En complément, le module de calcul 30 est configuré pour calculer, si la primitive de potentiel 26 est en forme d'une surface, telle qu'une surface plane, et dans le cas général, la direction du vecteur résultant élémentaire 32 correspondant comme étant une direction perpendiculaire à ladite primitive de potentiel 26 en forme de surface et passant par l'aéronef 10.

L'homme du métier comprendra alors que le module de calcul 30 est de manière générale configuré pour calculer la direction du vecteur résultant élémentaire 32 comme étant la direction correspondant à une ligne de courant 60 du champ de potentiel 28 engendré par la primitive de potentiel 26 respective, passant par l'aéronef 10.

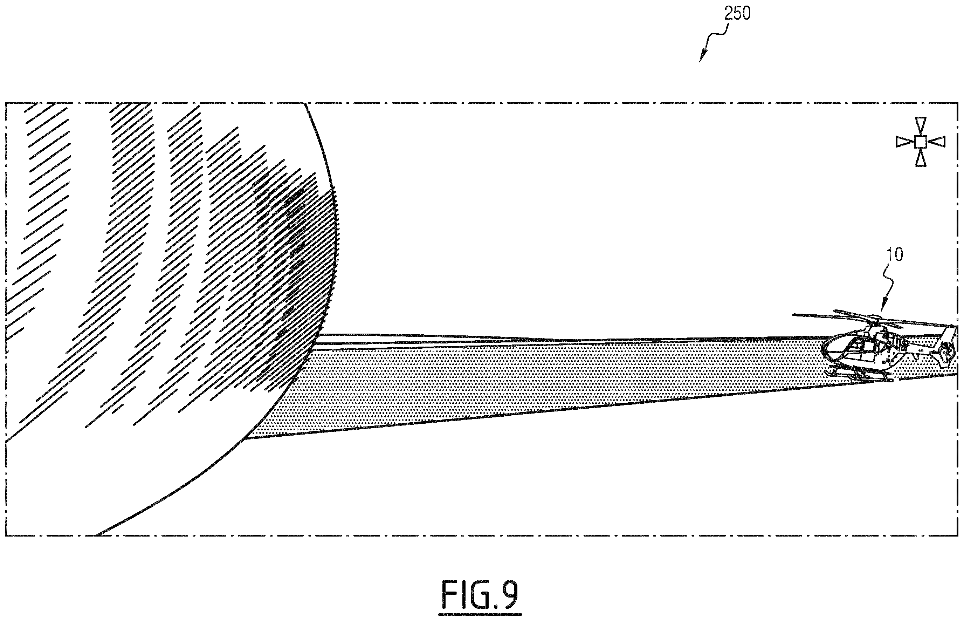

En complément facultatif, le module de calcul 30 est configuré pour ajouter un décalage suivant une direction prédéfinie et avec une amplitude prédéterminée à un ou plusieurs vecteurs résultants élémentaires 32 calculés. L'ajout d'un tel décalage (de l'anglais *offset)* permet typiquement de privilégier une manœuvre plutôt qu'une autre en cas d'obstacle à éviter. Le module de calcul 30 est alors par exemple configuré pour ajouter un décalage suivant la direction verticale, c'est-à-dire selon l'axe de référence vertical $z_0$, et de valeur positive lorsque le vecteur résultant élémentaire 32 a été calculé à partir d'une ou plusieurs primitives de potentiel 26 en forme de point ou de sphère et associées à un obstacle. Dans l'exemple des figures 8 et 9, un décalage positif vers le haut est ainsi ajouté au vecteur résultant élémentaire 32 qui a été calculé à partir de la primitive de potentiel 26 qui est globalement en forme de sphère. L'homme du métier comprendra alors que l'ajout d'un tel décalage positif selon la direction verticale permet de privilégier un évitement d'obstacle par le haut. Corolairement, l'ajout d'un décalage suivant la direction verticale, mais de valeur négative, permet de privilégier un évitement d'obstacle par le bas, ce qui est toutefois rare pour un aéronef.

Selon ce complément facultatif, le module de calcul 30 est en variante configuré pour ajouter un décalage suivant la direction transversale, c'est-à-dire selon l'axe de référence transversal $y_0$, et de valeur positive lorsque le vecteur résultant élémentaire 32 a été calculé à partir d'une ou plusieurs primitives de potentiel 26 en forme de point ou de sphère et associées à un obstacle. L'homme du métier comprendra alors que l'ajout d'un tel décalage positif selon la direction transversale permet de privilégier un évitement d'obstacle par la droite. Corolairement, l'ajout d'un décalage suivant la direction transversale, mais de valeur négative, permet de privilégier un évitement d'obstacle par la gauche, ce qui est toutefois rare pour un aéronef.

L'homme du métier observera en outre que dans l'exemple de la figure 9, le décalage vertical est, en variante, ajouté directement aux primitives de potentiel 26 qui ont été déterminées à partir du nuage de points de mesure acquis de la part du lidar, comme illustré sur la vue 250.

En complément facultatif encore ou en variante, le module de calcul 30 est configuré pour modifier, par exemple diminuer, et de préférence annuler, un ou plusieurs vecteurs résultants élémentaires 32 en fonction d'une distance exprimée entre le sol et la primitive de potentiel 26 associée audit vecteur résultant élémentaire 32. Cette distance estimée entre le sol et la primitive de potentiel 26 associée au vecteur résultant élémentaire 32, qui est ensuite modifié, est par exemple obtenue à partir des attitudes de l'aéronef 10, issues par exemple du capteur 16 de type centrale inertielle, ou encore à partir de mesures fournies d'une part par un ou plusieurs capteurs 16, tel qu'une hauteur par rapport au sol fournie par un télémètre, combinée à des hauteurs et positions absolues issues de la base de données 14.

L'homme du métier comprendra que cette modification, par exemple cette diminution, telle que cette annulation ou mise à zéro, d'un ou de plusieurs vecteurs résultants élémentaires 32 en fonction d'une distance exprimée entre le sol et la primitive de potentiel 26 associée audit vecteur résultant élémentaire 32 est typiquement utile lorsque l'aéronef 10 est proche du sol, par exemple en vol basse altitude ou rase motte, où l'aéronef 10 vole parallèlement au sol, car elle permet alors d'annuler une partie des vecteurs résultants des points de mesure du capteur 16, tel qu'un lidar, qui correspondent au sol. Sur sol plat, la distance au sol dans l'axe du capteur 16, tel que le lidar, est typiquement obtenue à partir de l'attitude de l'aéronef 10 et de sa hauteur par rapport au sol. En variante ou en complément, une information de réflectivité renvoyée par le lidar est utilisée pour interpréter la nature de l'obstacle, et alors déterminer s'il faut le considérer ou non.

Le module d'obtention 34 est configuré pour obtenir le vecteur résultant global 36 à partir de la somme du ou des vecteurs résultants élémentaires 32, calculés chacun par le module de calcul 30.

Le module d'obtention 34 est alors par exemple configuré pour obtenir ledit vecteur résultant global 36 en effectuant une somme vectorielle des vecteurs résultants élémentaires 32 précédemment calculés.

En variante, le module d'obtention 34 est configuré pour associer un coefficient de pondération respectif à chaque vecteur résultant élémentaire 32, puis pour obtenir le vecteur résultant global 36 à partir d'une somme pondérée, avec lesdits coefficients de pondération, des vecteurs résultants élémentaires 32 précédemment calculés. Chaque coefficient de pondération est alors typiquement associé à une source respective ayant permis de déterminer une ou plusieurs primitives de potentiel 26. L'utilisation de coefficients de pondération permet alors typiquement de prévoir un niveau de priorité respectif pour chaque source, ce qui permet par exemple de donner une priorité plus importante à une source de type capteur permettant de détecter le sol qu'à une autre source fournissant un champ constant de consigne de navigation. En complément facultatif, chaque coefficient de pondération présente en outre une valeur variable dans le temps, par exemple en fonction de phases d'une mission de l'aéronef 10.

En complément facultatif, le module d'obtention 34 est configuré en outre pour ajouter un vecteur supplémentaire au vecteur résultant global 36 obtenu. L'ajout de ce vecteur supplémentaire au vecteur résultant global 36 permet alors typiquement d'extraire l'aéronef d'un minimum local du champ de potentiel 28 respectif. Ce minimum local est typiquement détecté par observation d'une valeur du vecteur résultant global 36 ne dépassant pas un seuil prédéfini sur une durée prédéterminée. Ce minimum local est par exemple détecté si, pendant une durée supérieure à un durée minimale prédéfinie, de l'ordre de quelques secondes, le vecteur vitesse de l'aéronef 10 est nul ; la valeur du vecteur résultant global 36 se stabilise autour d'une valeur fixe, c'est-à-dire la variation absolue du vecteur résultant global 36 est inférieure à un seuil prédéfini pendant cette durée ; et les champs de potentiel 28 associés à l'aéronef 10 sont non-nuls.

Le module de conversion 38 est configuré pour convertir le vecteur résultant global 36 en l'au moins une consigne de guidage $C_G$. Le module de conversion 38 est par exemple configuré pour exprimer le vecteur résultant global 36 sous la forme d'un vecteur vitesse dans le référentiel de l'aéronef 10, c'est-à-dire dans la base de référence décrite en regard de la figure 3. En variante, le module de conversion 38 est configuré pour exprimer le vecteur résultant global 36 sous la forme d'un vecteur position dans ledit référentiel de l'aéronef 10, ou encore sous la forme d'un vecteur accélération dans ledit référentiel de l'aéronef 10. Chaque composante du vecteur vitesse, ou du vecteur position, ou encore du vecteur accélération, forme alors une consigne de guidage $C_G$ respective. L'homme du métier comprendra que le type du vecteur résultant global 36, choisi par exemple parmi un vecteur position, un vecteur vitesse, un vecteur accélération et une consigne de cap, et alors le type de consigne de guidage $C_G$ associée, dépend typiquement du système avionique 12 et/ou du système d'affichage 18 destiné à recevoir ladite consigne de guidage $C_G$.

En complément facultatif, le module de conversion 38 est configuré en outre pour limiter la valeur d'au moins une ou de chaque composante du vecteur vitesse, du vecteur position ou du vecteur accélération obtenu à partir du vecteur résultant global 36, afin d'avoir une consigne de guidage $C_G$ qui reste compatible d'un domaine de vol, d'usage ou encore de performances de l'aéronef 10.

En complément facultatif encore ou en variante, le module de conversion 38 est configuré pour limiter la valeur d'au moins une ou de chaque composante du vecteur vitesse, du vecteur position ou encore du vecteur accélération par rapport à un champ de vue 70, également noté FOV (de l'anglais *Field Of View),* d'un capteur 16 respectif, pris en compte en tant que source principale pour la détermination de primitive(s) de potentiel 26.

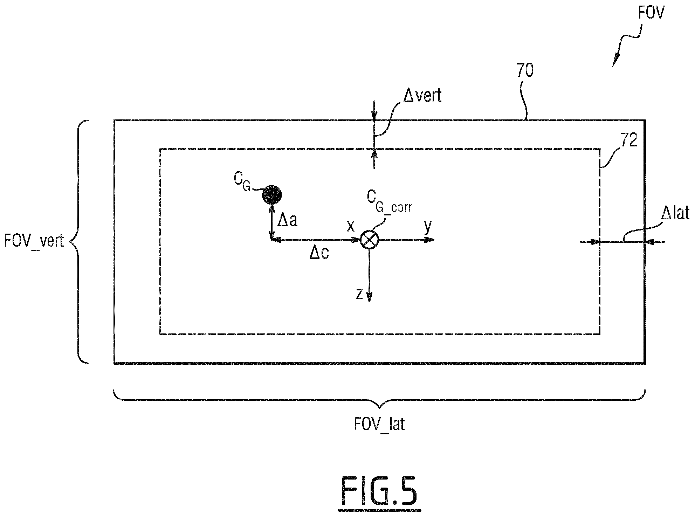

Selon ce complément facultatif, le module de conversion 38 est par exemple configuré pour limiter la valeur de la composante respective du vecteur vitesse, du vecteur position ou encore du vecteur accélération, à l'intérieur d'un espace de consigne 72, comme représenté sur la figure 5. L'espace de consigne 72 présente par exemple des dimensions réduites par rapport à celles du champ de vue 70, afin d'avoir une marge de part et d'autre de l'espace de consigne 72, entre ledit espace de consigne 72 et le champ de vue 70. Le champ de vue 70 présente, par exemple, une dimension FOV vert selon la direction verticale et une dimension FOV_lat selon la direction latérale, et les dimensions de l'espace de consigne 72 selon cette direction verticale et respectivement selon cette direction latérale sont alors égales à (FOV_lat - 2 x $\Delta_{vert}$), respectivement à (FOV_lat - 2 x $\Delta_{lat}$, où $\Delta_{vert}$ représente la marge verticale de part et d'autre de l'espace de consigne 72 et $\Delta_{lat}$ représente la marge latérale de part et d'autre dudit espace de consigne 72. En variante, le champ de vue 70 est circulaire avec une marge constante, exprimée sous forme d'un delta angulaire.

Selon ce complément facultatif, le module de conversion 38 est alors par exemple configuré pour limiter la valeur des composantes respectives du vecteur vitesse à l'aide des équations suivantes :

[Math 1]

$$\arctan\left(\frac{V_y}{V_x}\right) < \left(\frac{FOV\_lat}{2} - \Delta_{lat}\right)$$

[Math 2]

$$\arctan\left(\frac{V_z}{V_x}\right) < \left(\frac{FOV\_vert}{2} - \Delta_{vert}\right)$$

où arctan représente la fonction mathématique arc tangente ;

$V_x$, $V_y$, $V_z$ désignent respectivement les composantes longitudinale, transversale (ou latérale) et verticale du vecteur vitesse, la composante longitudinale étant supposée positive pour un capteur 16 orienté vers l'avant de l'aéronef 10 ;

FOV_lat représente la dimension selon la direction latérale du champ de vue 70 ;

$\Delta_{lat}$ représente la marge latérale ;

FOV vert représente la dimension selon la direction verticale du champ de vue 70 ;

$\Delta_{vert}$ représente la marge verticale.

Les marges latérale $\Delta_{lat}$ et verticale $\Delta_{vert}$ sont par exemple chacune sensiblement égale à 1°.

En complément facultatif encore ou en variante, le module de conversion 38 est configuré pour ajouter un delta d'assiette $\Delta_a$ et/ou un delta de cap $\Delta_c$ à la consigne de guidage $C_G$, pour obtenir une consigne de guidage corrigée $C_{G\_corr}$, comme représenté également sur la figure 5. L'ajout de ce delta d'assiette $\Delta_a$ et/ou de ce delta de cap $\Delta_c$ permet alors de recentrer le capteur 16 respectif sur la trajectoire de l'aéronef 10.

En complément facultatif encore ou en variante, lorsque l'orientation du capteur 16 est variable, c'est-à-dire modifiable, par rapport à l'aéronef 10, le module de conversion 38 est configuré pour piloter l'orientation du capteur 16 en envoyant des consignes d'attitude à un actionneur ou à un servomoteur couplé au capteur 16 pour modifier son orientation par rapport à l'aéronef 10. Ces consignes d'attitude pour le pilotage de l'orientation du capteur 16 sont typiquement obtenues à partir de deltas d'attitude, à savoir delta de roulis, delta d'assiette et delta de cap, calculés en tant que consigne(s) de guidage $C_G$ par le module de conversion 38. De manière analogue au(x) consigne(s) de guidage $C_G$, ces consignes d'attitude pour le pilotage de l'orientation du capteur 16 sont calculées cycliquement.

Le module d'affichage 40 est configuré pour afficher chaque consigne de guidage $C_G$ ainsi générée, sur le ou les systèmes d'affichage 18. Le module d'affichage 40 est alors en particulier pour configuré pour afficher chaque consigne de guidage générée $C_G$ à destination de l'utilisateur, tel que le pilote de l'aéronef 10, afin de lui permettre ensuite d'effectuer une manœuvre de l'aéronef 10 correspondant aux consignes de guidage affichées $C_G$. L'affichage de ces consignes de guidage $C_G$ est par exemple effectué sur un système d'affichage tête basse et/ou sur un système d'affichage tête haute.

En complément ou en variante, le module de transmission 42 est configuré pour transmettre chaque consigne de guidage générée $C_G$ à au moins un système avionique 12, en particulier à un système avionique 12 apte à recevoir de telles consignes $C_G$. L'homme du métier comprendra alors que dans ce cas la manœuvre de l'aéronef 10 correspondant aux consignes de guidage générées $C_G$ est directement effectuée par le ou les systèmes avioniques 12 auxquels la ou les consignes de guidage $C_G$ ont été transmises.

L'homme du métier comprendra que le module de transmission 42 est préférentiel par rapport au module d'affichage 40, chaque consigne de guidage générée $C_G$ étant préférentiellement transmise à au moins un système avionique 12, plutôt qu'affichée sur un système d'affichage 18 respectif.

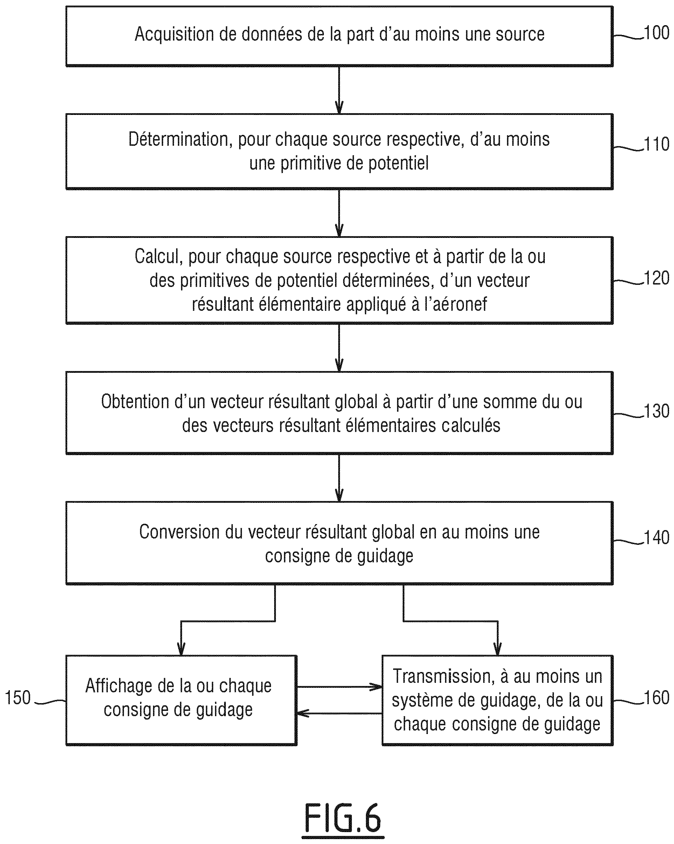

Le fonctionnement du système électronique de génération 20 selon l'invention va être à présent décrit en regard de la figure 6 représentant un organigramme du procédé, selon l'invention, de génération d'au moins une consigne de guidage $C_G$ pour l'aéronef 10.

Lors d'une étape initiale 100, le système de génération 20 acquiert, via son module d'acquisition 22, les données de la part de chaque source, chaque source respective étant choisie parmi les capteurs 16 et la base de données 14.

Dans l'exemple de la figure 7, la vue 200 représente les acquisitions respectives d'un nuage de points de mesure 205 de la part d'un capteur 16, tel qu'un lidar, d'un espace de vol interdit 210 de la part de la base de données 14 et d'une hauteur par rapport au sol 215 de la part d'un radioaltimètre.

Le système de génération détermine alors, lors de l'étape suivante 110, via son module de détermination 24 et pour chaque source, une ou plusieurs primitives de potentiel 26 à partir des données acquises pour ladite source respective. Chaque primitive de potentiel 26 déterminée est alors par exemple en forme d'un point ou d'une sphère, d'une surface ou encore d'une primitive uniforme.

Dans l'exemple des figures 7 et 8, les primitives de potentiel 26 déterminées pour le nuage de points de mesure 205 sont plusieurs primitives de potentiel ponctuelles, chaque primitive de potentiel 26 en forme de point étant associée à un point de mesure respectif du nuage de points 205.

Optionnellement, le module de détermination 24 réduit en outre le nombre de primitives de potentiel 26 pour le nuage de points 205 en conservant une seule primitive de potentiel 26 pour chaque sous-groupe de primitives de potentiel 26 initiales, comme expliqué ci-dessus en regard de la figure 4.

La primitive de potentiel 26 déterminée lors de l'étape 110 pour l'espace de vol interdit 210 est par exemple en forme d'une surface plane verticale correspondant à la frontière de l'espace de vol interdit 210 qui est la plus proche de l'aéronef 10.

La primitive de potentiel 26 déterminé lors de cette étape 110 pour la hauteur par rapport au sol 215 est en forme d'une surface plane horizontale correspondant au sol.

Lors de l'étape suivante 120, le système de génération 20 calcule, via son module de calcul 30, pour chaque source respective et à partir de la ou des primitives de potentiel 26 déterminées, le vecteur résultant élémentaire 32 respectif appliqué à l'aéronef 10.

Dans l'exemple de la figure 8, la vue 220 montre le champ de potentiel 28 correspondant au nuage de points 205 issu du capteur 16, tel que le lidar, représenté sous forme d'un vecteur 225 passant par l'aéronef 10 et la sphère associée audit nuage de points, et orienté de ladite sphère vers l'aéronef 10, le champ de potentiel 28 associé aux primitives de potentiel déterminées à partir du nuage de points 205 étant un champ répulsif. Le champ de potentiel 28 associé à l'espace de vol interdit 210 est représenté sous forme d'un vecteur 230, passant par l'aéronef 10 et orthogonal à la primitive de potentiel 26 associée en forme de surface plane, ce vecteur 230 étant également orienté vers l'aéronef 10 depuis la primitive de potentiel 26 sociétés, le champ de potentiel 28 associé étant également un champ répulsif. Le champ de potentiel 28 correspondant à la hauteur par rapport au sol 215 est symbolisé par un vecteur 235 passant par l'aéronef 10 et orthogonal au sol qui forme la primitive de potentiel 26 correspondante, ce vecteur 235 étant orienté vers la primitive de potentiel 26, c'est-à-dire vers le sol, le champ de potentiel 28 étant cette fois-ci un champ attractif.

Dans l'exemple de la figure 8, la vue 220 illustre également un champ de potentiel 28 associé à une primitive de potentiel 26 uniforme correspondant au courant de descente de l'aéronef 10, ce champ de potentiel 28 étant représenté sous forme d'un vecteur 240, incliné par rapport au sol et orienté vers le bas.

À l'issue de l'étape de calcul 120, le système de génération 20 passe à l'étape 130 lors de laquelle il obtient, via son module d'obtention 34, le vecteur résultant global 36 à partir de la somme du ou des vecteurs résultants élémentaires 32 calculés lors de l'étape de calcul 120. Cette somme des vecteurs résultants élémentaires 32 est par exemple une somme vectorielle.

Optionnellement, cette somme est en outre une somme pondérée avec des coefficients de pondération appliqués aux vecteurs résultants élémentaires 32 respectifs, chaque coefficient de pondération étant typiquement associé à une source respective ayant permis de déterminer une ou plusieurs primitives de potentiel 26.

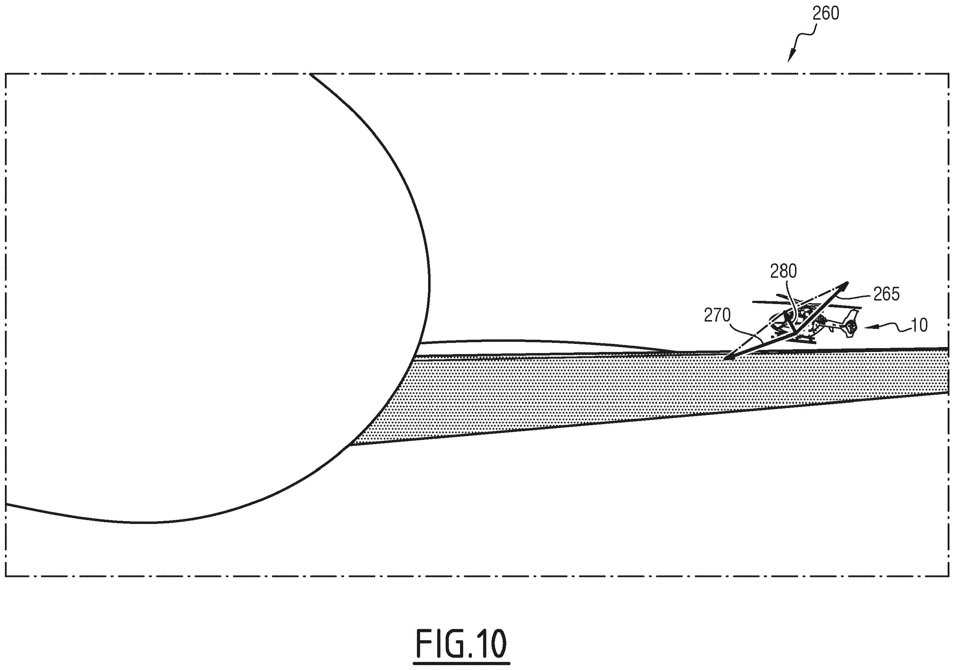

Dans l'exemple de la figure 10, la vue 260 montre alors le vecteur résultant élémentaire 32 calculé à partir du nuage de points 205 issu du capteur 16, tel que le lidar, à savoir le vecteur 265 orienté depuis la primitive de potentiel 26 globale en forme de sphère associée audit nuage vers l'aéronef 10, le champ de potentiel 28 associé audit nuage de points 205 étant un champ répulsif. Ce vecteur 260 ne passe pas par ladite sphère, car le vecteur 260 résulte de l'ajout d'un décalage vertical positif vers le haut au vecteur résultant élémentaire 32 initialement calculé. Le vecteur résultant élémentaire 32 calculé à partir d'un champ intrinsèque d'approche appliquée à aéronef 10 est le vecteur 270 incliné par rapport au sol et orienté vers le bas. Ce vecteur 270 correspond à une addition intermédiaire du vecteur résultant élémentaire 32 calculé à partir de l'espace de vol interdit 210, du vecteur résultant élémentaire 32 calculé à partir de la hauteur par rapport au sol 215 et du vecteur résultant élémentaire 32 à partir de la primitive de potentiel 26 uniforme correspondant au courant de descente de l'aéronef 10.

La vue 260 illustre alors le vecteur résultant global 36 obtenu à la partir de la somme des vecteurs résultants élémentaires 32, à savoir le vecteur 280. Dans cet exemple de la figure 10, le vecteur 280 est incliné, tout en étant orienté vers le haut, ce qui correspond à la manœuvre d'évitement par le haut que devra faire l'aéronef 10 afin d'éviter l'obstacle correspondant au nuage de points en forme de sphère, détecté par le capteur 16, tel que le lidar.

Le système de génération 20 convertit ensuite, lors de l'étape 140 et via son module de conversion 38, le vecteur résultant global 36 en l'au moins une consigne de guidage $C_G$. Lors de cette étape de conversion 140, le vecteur résultant global 36 est par exemple exprimé sous la forme du vecteur vitesse correspondant, ou encore du vecteur position, ou encore du vecteur accélération, dans le référentiel de l'aéronef.

Optionnellement, le module de conversion 38 limite en outre les composantes dudit vecteur vitesse, ou vecteur position, ou encore vecteur accélération, pour rester compatible du domaine de vol, du domaine usage ou encore des performances de l'aéronef 10. En complément ou en variante, le module de conversion 38 limite également les composantes dudit vecteur en regard du champ de vision 70 du capteur 16 respectif, comme décrit ci-dessus en regard de la figure 5.

La ou les consignes de guidage $C_G$ ainsi obtenues à l'issue de 140 sont alors affichées sur le ou les systèmes d'affichage 18 lors d'une étape d'affichage 150 par le système de génération 20, en particulier par son module d'affichage 40 ; et/ou sont transmises à au moins un système avionique 12, en particulier à un système avionique 12 apte à recevoir de telles consignes $C_G$, lors d'une étape de transmission 160 et par le système de génération 20, en particulier par son module de transmission 42.

En complément encore ou en variante, lorsque l'orientation du capteur 16 est ajustable par rapport à l'aéronef 10, le module de conversion 38 pilote l'orientation du capteur 16 en envoyant des consignes d'attitudes à l'actionneur ou au servomoteur couplé au capteur 16 pour modifier son orientation par rapport à l'aéronef 10. Ce pilotage de l'orientation du capteur 16 est effectué lors de l'étape de conversion 140, ou lors d'une étape complémentaire, non représentée, effectuée par exemple après l'étape d'affichage 150 ou l'étape de transmission 160, ou encore en parallèle de cette ou ces étapes d'affichage 150 et de transmission 160.

Ainsi, le système de génération 20 selon l'invention, et le procédé de génération associé, permettent de générer simplement au moins une consigne de guidage $C_G$, à partir des données acquises de la part de chaque source, et ceci sans analyse spécifique des données issues du ou des capteurs 16 de la part de l'opérateur.

La détermination, pour chaque source respective, d'au moins une primitive de potentiel 26 à partir des données acquises, puis le calcul d'un vecteur résultant élémentaire 32 à partir de la ou des primitives de potentiel 26 déterminées pour chaque source, et enfin l'obtention d'un vecteur résultant global 36 à partir d'une somme du ou des vecteurs résultant élémentaires 32 calculés, permet en effet de traiter automatiquement les données issues de chaque source.

En particulier, lorsque le ou les capteurs 16 équipant l'aéronef 10 sont des capteurs fournissant une quantité importante de données, tels que des capteurs 16 de type radar, lidar ou encore laser, le système de génération 20 selon l'invention requiert une plus faible puissance de calcul que des algorithmes traditionnels de reconnaissance d'images.

De plus, la charge cognitive du pilote étant particulièrement élevée dans les phases proches du terrain, le système de génération 20 selon l'invention permet de réduire les risques d'accident en apportant une importante aide au pilotage.

On conçoit ainsi que le système de génération 20 selon l'invention, et le procédé de génération associé, aident l'opérateur, tel que le pilote de l'aéronef 10, à mieux percevoir les obstacles aux alentours de l'aéronef 10, afin d'améliorer significativement la sécurité du vol de l'aéronef 10, notamment dans des environnements complexes et/ou inconnus de l'opérateur.

Le système de génération 20 selon l'invention, et le procédé de génération associé, sont également très avantageux dans le cas d'un aéronef 10 autonome ou encore d'un aéronef 10 en mode autonome (sans supervision humaine), pour se prémunir d'obstacles inconnus/non prévus.

**Revendications**

**1.** Procédé de génération d'au moins une consigne de guidage ($C_G$) pour un aéronef (10), le procédé étant mis en oeuvre par un système électronique de génération (20) et comprenant les étapes suivantes :

- acquisition (100) de données de la part d'au moins une source, chaque source respective étant choisie parmi un capteur (16) équipant l'aéronef (10) et une base de données (14) ;
- détermination (110), pour chaque source respective, d'au moins une primitive de potentiel (26) à partir des données acquises pour ladite source, chaque primitive de potentiel (26) engendrant un champ de potentiel (28) applicable à l'aéronef (10) ;
- calcul (120), pour chaque source respective et à partir de la ou des primitives de potentiel (26) déterminées pour ladite source, d'un vecteur résultant élémentaire (32) appliqué à l'aéronef (10) ;

- obtention (130) d'un vecteur résultant global (36) à partir d'une somme du ou des vecteurs résultant élémentaires (32) calculés ; et
- conversion (140) du vecteur résultant global (36) en l'au moins une consigne de guidage ($C_G$),

le procédé comprenant en outre au moins une étape parmi :

- affichage (150), sur un système d'affichage (18), de chaque consigne de guidage ($C_G$) ; et
- transmission (160), à un système avionique (12), de la ou chaque consigne de guidage ($C_G$),

le procédé étant **caractérisé en ce que**, lors de l'étape de calcul (120), au moins un vecteur résultant élémentaire (32) est modifié en fonction d'une distance exprimée entre le sol et la primitive de potentiel (26) associée audit vecteur résultant élémentaire (32).

2. Procédé selon la revendication 1, dans lequel, lors de l'étape de détermination (110), chaque primitive (26) est un élément choisi parmi le groupe consistant en : un point, une sphère, une surface et une primitive uniforme.

3. Procédé selon l'une quelconque des revendications précédentes, dans lequel, lors de l'étape de calcul (120), la norme de chaque vecteur résultant élémentaire (32) est fonction de la distance (D) entre l'aéronef (10) et la primitive de potentiel (26) respective ;
le vecteur résultant élémentaire (32) étant de préférence orienté vers la primitive de potentiel (26) respective si le champ de potentiel (28) associé est attractif et orienté à l'opposé de la primitive de potentiel (26) respective si le champ de potentiel (28) associé est répulsif.

4. Procédé selon l'une quelconque des revendications précédentes, dans lequel, lors de l'étape de calcul (120), au moins un vecteur résultant élémentaire (32) est annulé en fonction d'une distance exprimée entre le sol et la primitive de potentiel (26) associée audit vecteur résultant élémentaire (32).

5. Procédé selon l'une quelconque des revendications précédentes, dans lequel, lors de l'étape d'obtention (130), la somme du ou des vecteurs résultant élémentaires (32) est une somme pondérée, un coefficient de pondération étant associé à chaque source respective.

6. Procédé selon l'une quelconque des revendications précédentes, dans lequel, lors de l'étape de conversion (140), chaque consigne de guidage ($C_G$) est choisie parmi une composante d'un vecteur de guidage et une consigne de cap, le vecteur de guidage étant choisi parmi le groupe consistant en : un vecteur vitesse, un vecteur position et un vecteur accélération ;

l'étape de conversion (140) comportant de préférence une décomposition du vecteur résultant global en une ou plusieurs composantes locales, chaque composante locale étant selon un axe respectif d'un repère associé à l'aéronef, chaque consigne de guidage ($C_G$) dépendant alors d'une composante locale respective ;
l'étape de conversion (140) comportant de préférence encore une adaptation d'au moins une consigne de guidage ($C_G$) en fonction d'un champ de vue (70) d'un capteur (16) respectif.

7. Procédé selon l'une quelconque des revendications précédentes, dans lequel le procédé comprend en outre, lorsque l'orientation d'un capteur (16) respectif est variable par rapport à l'aéronef (10), une étape de pilotage de l'orientation dudit capteur 16 en fonction d'au moins une consigne de guidage ($C_G$) respective.

8. Programme d'ordinateur comportant des instructions logicielles qui, lorsqu'elles sont exécutées par un ordinateur, mettent en œuvre un procédé selon l'une quelconque des revendications précédentes.

9. Système électronique (20) de génération d'au moins une consigne de guidage ($C_G$) pour un aéronef (10), le système (20) comprenant :

- un module d'acquisition (22) configuré pour acquérir des données de la part d'au moins une source, chaque source respective étant choisie parmi un capteur (16) équipant l'aéronef (10) et une base de données (14) ;
- un module de détermination (24) configuré pour déterminer, pour chaque source respective, au moins une primitive de potentiel (26) à partir des données acquises pour ladite source, chaque primitive de potentiel (26) engendrant un champ de potentiel (28) applicable à l'aéronef (10) ;
- un module de calcul (30) configuré pour calculer, pour chaque source respective et à partir de la ou des primitives de potentiel (26) déterminées pour ladite source, un vecteur résultant élémentaire (32) appliqué à l'aéronef (10) ;
- un module d'obtention (34) configuré pour obtenir un vecteur résultant global (36) à partir d'une somme du ou des vecteurs résultant élémentaires (32) calculés ; et
- un module de conversion (38) configuré pour convertir le vecteur résultant global (36) en l'au moins une consigne de guidage ($C_G$),
le système comprenant en outre au moins un module parmi un module d'affichage (40) configuré pour afficher chaque consigne de guidage ($C_G$) sur un système d'affichage (18) et un module de transmission (42) configuré pour transmettre chaque consigne de guidage ($C_G$) à au moins un système avionique (12),
le système électronique étant **caractérisé en ce que** le module de calcul (30) est configuré pour modifier au moins un vecteur résultant élémentaire (32) en fonction d'une distance exprimée entre le sol et la primitive de potentiel (26) associée audit vecteur résultant élémentaire (32).

**10.** Aéronef (10), tel qu'un avion ou un hélicoptère, comprenant :

- au moins un système avionique (12), tel qu'un dispositif de pilotage automatique, un système de commandes de vol, un dispositif d'auto-poussée, ou un système de gestion du vol de l'aéronef,
- un système électronique (20) de génération d'au moins une consigne de guidage ($C_G$),

**caractérisé en ce que** le système électronique de génération (20) est conforme à la revendication 9.

**Patentansprüche**

**1.** Verfahren zum Erzeugen mindestens einer Führungsanweisung ($C_G$) für ein Luftfahrzeug (10), wobei das Verfahren von einem elektronischen Erzeugungssystem (20) implementiert wird und die folgenden Schritte umfasst:

- Erfassen (100) von Daten von mindestens einer Quelle, wobei jede jeweilige Quelle ausgewählt ist aus einem Sensor (16), mit dem das Luftfahrzeug (10) ausgestattet ist, und einer Datenbank (14);
- Bestimmen (110), für jede jeweilige Quelle, mindestens einer Potenzial-Stammfunktion (26) aus den für die Quelle erfassten Daten, wobei jede Potenzial-Stammfunktion (26) ein Potenzialfeld (28) erzeugt, das auf das Luftfahrzeug (10) anwendbar ist;
- Berechnen (120), für jede jeweilige Quelle und aus der oder den Potenzial-Stammfunktionen (26), die für die Quelle bestimmt werden, eines elementaren resultierenden Vektors (32), der auf das Luftfahrzeug (10) angewendet wird;
- Erlangen (130) eines globalen resultierenden Vektors (36) aus einer Summe des oder der berechneten resultierenden Vektoren (32); und
- Umwandeln (140) des globalen resultierenden Vektors (36) in die mindestens eine Führungsanweisung ($C_G$),

das Verfahren ferner umfassend mindestens einen Schritt von:

- Anzeigen (150), auf einem Anzeigesystem (18), von jeder Führungsanweisung ($C_G$); und
- Übertragen (160), an ein Avionik-System (12), der oder jeder Führungsanweisung ($C_G$),

wobei das Verfahren **dadurch gekennzeichnet ist, dass** bei dem Berechnungsschritt (120) mindestens ein elementarer resultierender Vektor (32) abhängig von einem ausgedrückten Abstand zwischen dem Boden und der Potenzial-Stammfunktion (26), die mit dem elementaren resultierenden Vektor (32) assoziiert ist, modifiziert wird.

**2.** Verfahren nach Anspruch 1, wobei bei dem Bestimmungsschritt (110) jede Stammfunktion (26) ein Element ist, das ausgewählt ist aus der Gruppe, bestehend aus: einem Punkt, einer Kugel, einer Fläche und einer gleichförmigen Stammfunktion.

**3.** Verfahren nach einem der vorherigen Ansprüche, wobei, bei dem Berechnungsschritt (120), die Norm von jedem elementaren resultierenden Vektor (32) abhängig von dem Abstand (D) zwischen dem Luftfahrzeug (10) und der jeweiligen Potenzial-Stammfunktion (26) ist;
wobei der elementare resultierende Vektor (32) vorzugsweise auf die jeweilige Potenzial-Stammfunktion (26) ausgerichtet ist, wenn das assoziierte Potenzialfeld (28) attraktiv ist, und von der jeweiligen Potenzial-Stammfunktion (26) weg ausgerichtet ist, wenn das assoziierte Potenzialfeld (28) repulsiv ist.

4. Verfahren nach einem der vorherigen Ansprüche, wobei, bei dem Berechnungsschritt (120), mindestens ein elementarer resultierender Vektor (32) abhängig von einem ausgedrückten Abstand zwischen dem Boden und der Potenzial-Stammfunktion (26), die mit dem elementaren resultierenden Vektor (32) assoziiert ist, annulliert wird.

5. Verfahren nach einem der vorherigen Ansprüche, wobei, bei dem Schritt eines Erlangens (130), die Summe des oder der elementaren resultierenden Vektoren (32) eine gewichtete Summe ist, wobei mit jeder jeweiligen Quelle ein Gewichtungskoeffizient assoziiert ist.

6. Verfahren nach einem der vorherigen Ansprüche, wobei, bei dem Umwandlungsschritt (140), jedes Führungsanweisung ($C_G$) ausgewählt ist aus einer Komponente eines Führungsvektors und einer Kursanweisung, wobei der Führungsvektor ausgewählt ist aus der Gruppe, bestehend aus: einem Geschwindigkeitsvektor, einem Positionsvektor und einem Beschleunigungsvektor;

   der Umwandlungsschritt (140) vorzugsweise umfassend ein Zerlegen des globalen resultierenden Vektors in eine oder mehrere lokale Komponenten, wobei jede lokale Komponente entlang einer jeweiligen Achse eines mit dem Luftfahrzeug assoziierten Koordinatensystems ist, wobei jede Führungsanweisung ($C_G$) dann von einer jeweiligen lokalen Komponente abhängt;
   der Umwandlungsschritt (140) vorzugsweise auch umfassend eine Anpassung mindestens einer Führungsanweisung ($C_G$) abhängig von einem Sichtfeld (70) eines jeweiligen Sensors (16).

7. Verfahren nach einem der vorherigen Ansprüche, wobei das Verfahren, wenn die Ausrichtung eines jeweiligen Sensors (16) in Bezug auf das Luftfahrzeug (10) variabel ist, ferner einen Schritt zum Steuern der Ausrichtung des Sensors 16 abhängig von mindestens einer jeweiligen Führungsvorgabe ($C_G$) umfasst.

8. Computerprogramm, umfassend Softwareanweisungen, die, wenn sie von einem Computer ausgeführt werden, ein Verfahren nach einem der vorherigen Ansprüche implementieren.

9. Elektronisches System (20) zum Erzeugen mindestens einer Führungsanweisung (CG) für ein Luftfahrzeug (10), das System (20) umfassend:

   - ein Erfassungsmodul (22), das konfiguriert ist, um Daten von mindestens einer Quelle zu erfassen, wobei jede jeweilige Quelle ausgewählt ist aus einem Sensor (16), mit dem das Flugzeug (10) ausgestattet ist, und einer Datenbank (14);
   - ein Bestimmungsmodul (24), das konfiguriert ist, um für jede jeweilige Quelle mindestens eine Potenzial-Stammfunktion (26) aus den für die Quelle erfassten Daten zu bestimmen, wobei jede Potenzial-Stammfunktion (26) ein Potenzialfeld (28) erzeugt, das auf das Luftfahrzeug (10) anwendbar ist;
   - ein Berechnungsmodul (30), das konfiguriert ist, um für jede jeweilige Quelle und aus der oder den Potenzial-Stammfunktionen (26), die für die Quelle bestimmt werden, einen elementaren resultierenden Vektor zu berechnen (32), der auf das Flugzeug (10) angewendet wird;
   - ein Ermittlungsmodul (34), das konfiguriert ist, um einen globalen resultierenden Vektor (36) aus einer Summe des oder der berechneten resultierenden Vektoren (32) zu erlangen; und
   - ein Umwandlungsmodul (38), das konfiguriert ist, um den globalen resultierenden Vektor (36) in die mindestens eine Führungsanweisung ($C_G$) umzuwandeln,
   das System ferner umfassend mindestens eines von einem Anzeigemodul (40), das konfiguriert ist, um jede Führungsanweisung ($C_G$) auf einem Anzeigesystem (18) anzuzeigen, und einem Übertragungsmodul (42), das konfiguriert ist, um jede Führungsanweisung ($C_G$) an mindestens ein Avionik-System (12) zu übertragen,
   wobei das elektronische System **dadurch gekennzeichnet ist, dass** das Berechnungsmodul (30) konfiguriert ist, um mindestens einen elementaren resultierenden Vektor (32) abhängig von einem ausgedrückten Abstand zwischen dem Boden und der Potenzial-Stammfunktion (26), die mit dem elementaren resultierenden Vektor (32) assoziiert ist, zu modifizieren.

10. Luftfahrzeug (10), wie beispielsweise ein Luftfahrzeug oder ein Hubschrauber, umfassend:

    - mindestens ein Avionik-System (12), wie beispielsweise ein Autopilotsystem, ein Flugsteuerungssystem, ein Autoschubgerät oder ein Flugmanagementsystem für das Luftfahrzeug,
    - ein elektronisches System (20) zum Erzeugen von mindestens einer Führungsanweisung ($C_G$),

    **dadurch gekennzeichnet, dass** das elektronische Erzeugungssystem (20) dem Anspruch 9 entspricht.

**Claims**

1. A method for generating at least one guidance set point ($C_G$) for an aircraft (10), the method being implemented by an electronic generation system (20) and comprising the following steps:

   - acquiring (100) data from at least one source, each respective source being selected from a sensor (16) fitted to the aircraft (10) and a database (14);
   - determining (110), for each respective source, at least one potential primitive (26) from the data acquired for said source, each potential primitive (26) generating a potential field (28) applicable to the aircraft (10);
   - calculating (120), for each respective source and from the potential primitive(s) (26) determined for said source, an elementary resultant vector (32) applied to the aircraft (10);
   - obtaining (130) an overall resultant vector (36) from a sum of the calculated elementary resultant vector(s) (32); and
   - converting (140) the overall resultant vector (36) into the at least one guidance setpoint ($C_G$),

   the method further comprising at least one of:

   - displaying (150), on a display system (18), each guidance setpoint ($C_G$); and
   - transmitting (160), to an avionics system (12), of the or each guidance instruction ($C_G$),

   the method being **characterised in that**, in the calculation step (120), at least one elementary resultant vector (32) is modified as a function of a distance expressed between the ground and the potential primitive (26) associated with said elementary resultant vector (32).

2. The method according to claim 1, wherein in the determining step (110) each primitive (26) is a member selected from the group consisting of: a point, a sphere, a surface, and a uniform primitive.

3. The method according to any of the preceding claims, wherein in the calculation step (120) the norm of each elementary resultant vector (32) is a function of the distance (D) between the aircraft (10) and the respective potential primitive (26);
   the elementary resultant vector (32) preferably being oriented towards the respective potential primitive (26) if the associated potential field (28) is attractive and oriented away from the respective potential primitive (26) if the associated potential field (28) is repulsive.

4. The method according to any of the preceding claims, wherein in the calculation step (120), at least one elementary resultant vector (32) is modified as a function of a distance expressed between the ground and the potential primitive (26) associated with said elementary resultant vector (32).

5. The method according to any of the preceding claims, wherein in the obtaining step (130), the sum of the elementary resultant vector(s) (32) is a weighted sum, with a weighting coefficient associated with each respective source.

6. The method according to any one of the preceding claims, wherein in the conversion step (140), each guidance setpoint ($C_G$) is selected from a component of a guidance vector and a heading setpoint, the guidance vector being selected from the group consisting of: a velocity vector, a position vector and an acceleration vector;

   the conversion step (140) preferably comprising a breakdown of the overall resultant vector into one or more local components, each local component being along a respective axis of a reference frame associated with the aircraft, each guidance setpoint ($C_G$) then depending on a respective local component;
   the conversion step (140) preferably further comprising an adaptation of at least one guidance setpoint ($C_G$) as a function of a field of view (70) of a respective sensor (16).

7. The method according to any one of the preceding claims, wherein the method further comprises, when the orientation of a respective sensor (16) is variable with respect to the aircraft (10), a step of steering the orientation of said sensor (16) as a function of at least one respective guidance setpoint ($C_G$).

8. A computer program comprising software instructions which, when executed by a computer, implement a method according to any one of the preceding claims.

9. An electronic system (20) for generating at least one guidance setpoint ($C_G$) for an aircraft (10), the system (20) comprising:

- an acquisition model (22) configured to acquire data from at least one source, each respective source being selected from a sensor (16) fitted to the aircraft (10) and a database (14);
- a determination module (24) configured to determine, for each respective source, at least one potential primitive (26) from the data acquired for said source, each potential primitive (26) generating a potential field (28) applicable to the aircraft (10);
- a calculation module (30) configured to calculate, for each respective source and from the potential primitive(s) (26) determined for said source, an elementary resultant vector (32) applied to the aircraft (10);
- an obtaining module (34) configured to obtain a overall resultant vector (36) from a sum of the calculated elementary resultant vector(s) (32); and
- a conversion module (38) configured to convert the overall resultant vector (36) into the at least one guidance setpoint ($C_G$),

the system further comprising at least one of a display module (40) configured to display each guidance setpoint ($C_G$) on a display system (18) and a transmission module (42) configured to transmit each guidance setpoint ($C_G$) to at least one avionics system (12),

the electronic system being **characterised in that** the calculation module (30) is configured to modify at least one elementary resultant vector (32) as a function of a distance expressed between the ground and the potential primitive (26) associated with said elementary resultant vector (32).

10. An aircraft (10), such as an aeroplane or helicopter, comprising:

- at least one avionics system (12), such as an autopilot device, flight control system, autothrust device, or aircraft flight management system,
- an electronic system (20) for generating at least one guidance setpoint ($C_G$),

**characterised in that** the electronic display system (20) is according to claim 9.

FIG.1

EP 3 882 735 B1

## FIG.2

FIG.3

**FIG.4**

EP 3 882 735 B1

FIG.5

Acquisition de données de la part d'au moins une source ⎯100

Détermination, pour chaque source respective, d'au moins une primitive de potentiel ⎯110

Calcul, pour chaque source respective et à partir de la ou des primitives de potentiel déterminées, d'un vecteur résultant élémentaire appliqué à l'aéronef ⎯120

Obtention d'un vecteur résultant global à partir d'une somme du ou des vecteurs résultant élémentaires calculés ⎯130

Conversion du vecteur résultant global en au moins une consigne de guidage ⎯140

150⎯ Affichage de la ou chaque consigne de guidage

Transmission, à au moins un système de guidage, de la ou chaque consigne de guidage ⎯160

## FIG.6

FIG.7

FIG.8

EP 3 882 735 B1

EP 3 882 735 B1

FIG.9

FIG.10

**RÉFÉRENCES CITÉES DANS LA DESCRIPTION**

**Littérature non-brevet citée dans la description**

- **ZHAO.** *UAV Formation Control with Obsatacle Avoidance Using Improved Artificial Potential Fields*